# EUROPÄISCHE PATENTSCHRIFT

(11) **EP 1 624 990 B1**
(45) Veröffentlichungstag und Bekanntmachung des Hinweises auf die Patenterteilung: **30.05.2007**
(21) Anmeldenummer: 04728097.9
(22) Anmeldetag: 17.04.2004
(51) Int. Cl.: B23C 3/18

(54) **VERFAHREN ZUM FRÄSEN VON FREIFORMFLÄCHEN**
METHOD FOR THE CUTTING OF FREEFORM SURFACES
PROCEDE POUR FRAISER DES SURFACES A FORME LIBRE

(30) Priorität: 17.05.2003 DE 10322340
(43) Veröffentlichungstag der Anmeldung: 15.02.2006
(73) Patentinhaber: MTU Aero Engines GmbH, 80995 München (DE)
(72) Erfinder: GLÄSSER , Arndt, 85221 Dachau (DE)
(86) Internationale Anmeldenummer: PCT/DE2004/000807
(87) Internationale Veröffentlichungsnummer: WO 2004/103622

(56) Entgegenhaltungen:
- DE-A- 19 607 192
- US-A- 4 596 501

## Beschreibung

Die Erfindung betrifft ein Verfahren zum Fräsen von Freiformflächen nach dem Oberbegriff des Patentanspruchs 1.

Die hier vorliegende Erfindung betrifft das Gebiet der Frästechnik, insbesondere das HSC (High Speed Cutting)-Fräsen, welches auch als HPC (High Performance Cutting)-Fräsen bezeichnet wird.

Beim HSC-Fräsen eines Werkstücks zur Bereitstellung einer gewünschten dreidimensionalen Geometrie, also zum Bereitstellen einer gewünschten Freiformfläche am Werkstück, treten nach dem Stand der Technik erhebliche Probleme auf. Schon bei geringen Vorschubgeschwindigkeiten des Werkzeugs bzw. des Fräsers läuft die Fräsbewegung nicht mehr harmonisch ab, sondern ruckartig. Hierdurch wird die Mechanik einer Fräsmaschine zu Schwingungen angeregt. Infolge dieser Schwingungen bilden sich auf der Oberfläche des zu bearbeitenden Werkstücks tiefe Marken bzw. Schwingungsmuster aus. Diese Unregelmäßigkeiten in der sich einstellenden Freiformfläche des zu bearbeitenden Werkstücks sind dabei so stark, dass eine nachfolgende Glättung der Oberfläche nicht oder nur mit großem Aufwand möglich ist. Dies gilt insbesondere dann, wenn es sich bei dem zu bearbeitenden Werkstück um eine Laufschaufel einer Gasturbine bzw. um eine Bladed Disk - Blisk genannt - handelt. Eine Serienfertigung von Blisks ist mit den aus dem Stand der Technik bekannten Fräsverfahren derzeit nicht möglich.

Die oben beschriebenen Probleme beim HSC-Fräsen von insbesondere Blisks ergeben sich durch Unstetigkeiten bzw. durch starke Änderungen im Verlauf der Fräsbahn bzw. im Verlauf der Werkzeugvektoren. Diese Unstetigkeiten bzw. starken Änderungen können, wie unten in größerem Detail diskutiert wird, einerseits direkt durch das CAD-Model und andererseits durch die Art und Weise der Definition der Werkzeugvektoren verursacht sein:
- CAD-Modell als Ursache: Jedes CAD-Model besteht aus mehreren Flächen die wiederum aus mehreren Patches zusammengesetzt sind. Bei dem Übergang von einer Fläche zu einer benachbarten Fläche bzw. von einem Patch zu einem benachbarten Patch können Unstetigkeiten (nicht tangenten- bzw. krümmungsstetige Übergänge, Lücken, Absätze, Überlappungen) auftreten. Je nach Art und Weise wie die Flächen definiert wurden, können die Flächen zusätzlich innerhalb der Patches oder innerhalb der Flächen zum Schwingen neigen. Die Schwingungen äußern sich durch starke periodische Änderung der Krümmung. Unstetigkeiten und Schwingungen wirken sich direkt auf die Werkzeugbahn aus. Die Auswirkung auf den Verlauf der Werkzeugvektoren ist von der Art und Weise abhängig, wie die Werkzeugvektoren definiert werden.
- Definition der Werkzeugvektoren als Ursache: Zur Definition der Werkzeugvektoren gibt es nach dem Stand der Technik drei Verfahren. Ein erstes Verfahren nutzt konstante Werkzeugvektoren: Diese Methode ist zum Fräsen von Freiformflächen nicht geeignet, da Freiformflächen mit konstantem Werkzeugvektor nicht kollisionsfrei bearbeitet werden können. Ein zweites Verfahren nutzt interpolierte Werkzeugvektoren: Bei dieser Methode werden entlang der Fräsbahn Stützvektoren definiert, zwischen denen der Werkzeugvektor interpoliert wird. In der Regel werden die Werkzeugvektoren linear zwischen den Stützvektoren interpoliert, was Unstetigkeiten im Verlauf der Werkzeug vektoren an der Stelle der Stützvektoren zur Folge hat Ein drittes Verfahren nutzt eine Werkzeugvektordefinition relativ zur Fläche unter Angabe eines Anstellwinkels und eines Vorlaufwinkels: Bei dieser Methode ist der Verlauf der Werkzeugvektoren direkt von der Qualität des CAD-Modells abhängig. Unstetigkeiten bzw. Schwingungen wirken sich direkt auf den Verlauf der Werkzeugvektoren aus.

So offenbart US 4 596 501 ein Verfahren zum Fräsen von Freiformflächen, bei dem das Werkzug zum Fräsen entlang einer Werkzeugbahn bewegt wird und zusätzlich zu der Werkzeugbahn eine erste Führungskurve definiert wird, wobei der Werkzeugvektor in Abhängigkeit der Führungskurve ausgerichtet wird. Einsetzbar ist dieses Verfahren dort, wo das Werkstück keine starken Krümmungen quer zur Fräsrichtung aufweist.

DE 196 07 192 A1 zeigt ein Fräsverfahren unter Reduzierung der Freiheitsgrade, bei dem das Werkstück und das Werkzeug nur translatorisch gegeneinander bewegt werden. Hierdurch bleibt jedoch die Krümmung der Freiformflächen beschränkt.

Hiervon ausgehend liegt der vorliegenden Erfindung das Problem zu Grunde, ein neuartiges Verfahren zum Fräsen von Freiformflächen sowie eine entsprechende Vorrichtung zu schaffen, bei dem die Fräsbewegung bei allen Geometrien nicht mehr ruckartig sondern harmonisch abläuft.

Dieses Problem wird dadurch gelöst, dass das eingangs genannte Verfahren zum Fräsen von Freiformflächen durch die Merkmale des kennzeichnenden Teils des Patentanspruchs 1 weitergebildet ist.

Erfindungsgemäß wird zusätzlich eine zweite Führungskurve für einen Werkzeugvektor des Werkzeugs definiert, wobei die Führungskurven derart definiert werden, dass das Werkstück kollisionsfrei bearbeitet werden kann und wobei durch die erste und zweite Führungskurve eine Führungsfläche bestimmt wird, und dass abhängig von einem Verhältnis zwischen einer aktuellen Fräsbahn und der Gesamtanzahl der Fräsbahnen eine in der Führungsfläche liegende Führungskurve ermittelt wird, durch die der Werkzeugvektor des Werkzeugs geführt wird. Die Erfindung zeigt eine Methode zur Definition der Werkzeugvektoren auf, bei welcher der Verlauf der Werkzeugvektoren unabhängig von der Qualität zu bearbeitenden Fläche ist. Durch die Erfindung wird sichergestellt, dass der Verlauf der Werkzeugvektoren immer stetig ist, insbesondere auch, wenn das zu bearbeitende Werkstück eine starke Krümmung quer zur Fräsrichtung aufweist und die Anstellung des Werkzeugs bzw. Fräsers von der ersten bis zur letzten Fräsbahn stärker verändert werden muss.

Vorzugsweise werden zusätzlich zu der oder jeder Führungskurve Synchronisationspunkte definiert, wobei mit Hilfe der Synchronisationspunkte die Ausrichtung des Werkzeugsvektors zwischen der oder jeden Werkzeugbahn und der oder jeden Führungskurve synchronisiert wird. Dies ist dann vorteilhaft, wenn die Werkzeugbahn bzw. Fräsbahn eine abweichende Form bzw. abweichende Größenverhältnisse zur Führungskurve aufweist.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: ein zu fräsendes Werkstück zur Verdeutlichung einer Ausführungsform mit nur einer Führungskurve;
- Fig. 2:: das Werkstück der Fig. 1 zur weiteren Verdeutlichung der Ausführungsform mit nur einer Führungskurve;
- Fig. 3:: das Werkstück der Fig. 1 und 2 zur weiteren Verdeutlichung der Ausführungsform mit nur einer Führungskurve;
- Fig. 4:: ein zu fräsendes Werkstück zur Verdeutlichung einer Ausführungsform des erfindungsgemäßen Verfahrens; und
- Fig. 5:: ein stark schematisiertes Blockschaltbild einer Vorrichtung zum Fräsen von Freiformflächen gemäß des erfindungsgemäßen Verfahrens.

Nachfolgend wird die hier vorliegende Erfindung unter Bezugnahme auf die Figuren in größerem Detail erläutert. Bevor jedoch die Details des erfindungsgemäßen Verfahrens dargestellt werden, sollen nachfolgend einige Begriffe definiert werden, auf die später Bezug genommen wird.

Bei der Fräsbearbeitung eines zu bearbeitenden Werkstücks soll sich an der Oberfläche des Werkstücks eine gewünschte dreidimensionale Geometrie einstellen. Diese gewünschte dreidimensionale Geometrie an der Oberfläche des Werkstücks wird auch als Freiformfläche bezeichnet.

Die Fräsbearbeitung des zu bearbeitenden Werkstücks erfolgt mithilfe eines Werkzeugs, einem sogenannten Fräser. Zur Bearbeitung des Werkstücks wird das Werkzeug bzw. der Fräser relativ zum Werkstück bewegt. Die Bewegung des Werkzeugs bzw. Fräsers relativ zum Werkstück wird durch sogenannte Werkzeugkoordinaten beschrieben, wobei die Werkzeugkoordinaten die Position einer Werkzeugspitze bzw. eines Werkzeugbezugspunkt definieren. Die Bewegung der Werkzeugspitze bzw. des Werkzeugbezugspunkts bei der Fräsbearbeitung des Werkstücks bezeichnet man als Werkzeugbahn bzw. Fräsbahn. Ausgehend von der Werkzeugspitze bzw. dem Werkzeugbezugspunkt erstreckt ein Vektor entlang einer Werkzeugachse bzw. eines Werkzeugschaftes des Werkzeugs bzw. Fräsers. Dieser Vektor entlang der Werkzeugachse ausgehend von der Werkzeugspitze in Richtung des Werkzeugschaftes bezeichnet man als Werkzeugvektor.

Die Fräsbearbeitung eines Werkstücks zur Ausbildung einer definierten dreidimensionalen Freiformfläche erfolgt mithilfe eines sogenannten Fünf-Achsfräsens. Beim Fünf-Achsfräsen kann das Werkzeug in fünf Achsen relativ zum zu bearbeitenden Werkstück bewegt werden. Drei Achsen dienen der linearen Relativbewegung des Werkzeugs relativ zum Werkstück, so dass jeder Punkt im Raum angefahren werden kann. Zusätzlich zu dieser linearen Bewegung entlang der sogenannten Linearachsen ist das Werkzeug zur Realisierung von Hinterschneidungen auch um eine Schwenkachse sowie eine Kippachse bewegbar. Entlang der Schwenkachse sowie der Kippachse werden rotatorische Bewegungen des Werkzeugs ermöglicht. Hierdurch ist es möglich, dass alle Punkte im Raum ohne Kollision angefahren werden können. Die Schwenkachse sowie die Kippachse werden häufig auch allgemein mit Rundachsen bezeichnet.

Im Sinne der Erfindung wird ein Verfahren zum Fräsen von Freiformflächen an einem Werkstück vorgeschlagen, wobei ein Werkzeug bzw. ein Fräser entlang mindestens einer definierten Werkzeugbahn bzw. Fräsbahn relativ zum Werkstück bewegt wird, um die Fräsbearbeitung des Werkstücks durchzuführen. Zusätzlich zu der oder jeden Werkzeugbahn wird eine erste Führungskurve für einen Werkzeugvektor des Werkzeugs definiert. Beim Fräsen wird der Werkzeugvektor in Abhängigkeit von der oder jeder Führungskurve ausgerichtet, wobei zusätzlich eine zweite Führungskurve definiert wird, wobei die Führungskurven derart definiert werden, dass das Werkstück kollisionsfrei bearbeitet werden kann und wobei durch die erste und zweite Führungskurve eine Führungsfläche bestimmt wird, und dass abhängig von einem Verhältnis zwischen einer aktuellen Fräsbahn und der Gesamtanzahl der Fräsbahnen eine in der Führungsfläche liegende Führungskurve ermittelt wird, durch die der Werkzeugvektor des Werkzeugs geführt wird.

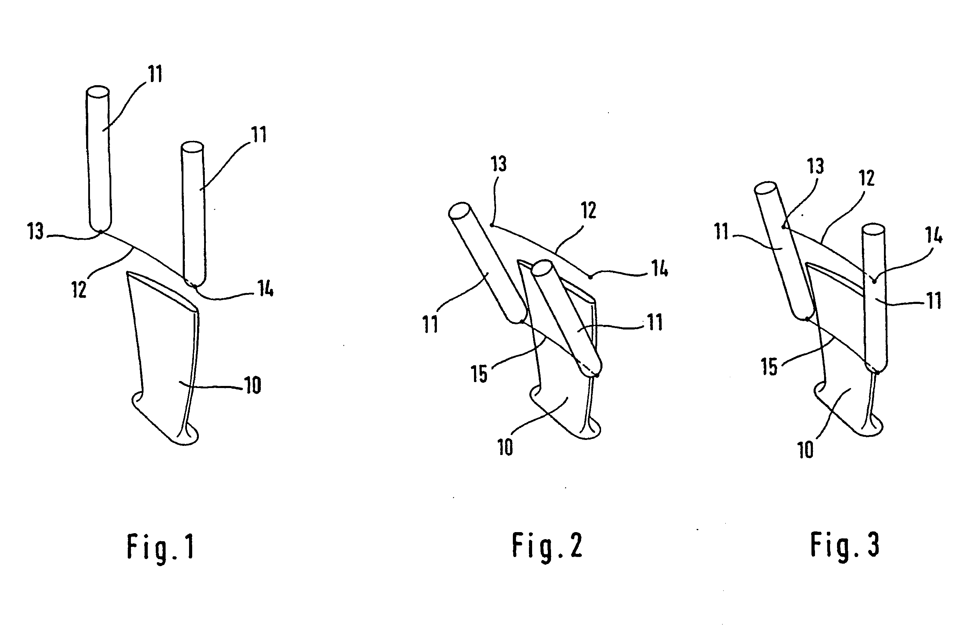

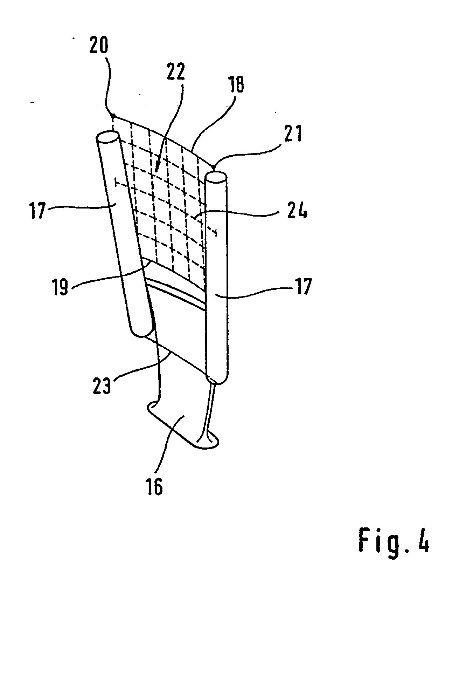

Zur Veranschaulichung des erfindungsgemäßen Verfahrens wird nachfolgend unter Bezugnahme auf Fig. 1 bis 3 im Vorfeld ein Verfahren mit einer Führungskurve im Detail beschrieben, um dann in Fig. 4 auf das erfindungsgemäße Verfahren mit zwei Führungskurven einzugehen. Fig. 1 bis 3 zeigen ein zu bearbeitendes Werkstück 10, welches hier als Laufschaufel einer Gasturbine bzw. Blisk ausgebildet ist. Mithilfe eines Werkzeugs 11, im gezeigten Beispiel ein Fräser, soll das Werkstück 10 derart bearbeitet werden, dass sich an einer Oberfläche des Werkstücks 10 die gewünschte Freiformfläche ergibt. Fig. 1 bis 3 zeigen das Werkzeug 11 jeweils in zwei unterschiedlichen Positionen relativ zum Werkstück 10.

Das Beispiel der Fig. 1 bis 3 betrifft ein Verfahren, bei welchem eine einzige Führungskurve definiert wird. Das Fräsen mit einer einzigen Führungskurve ist dann ausreichend, wenn das zu bearbeitende Werkstück bzw. die zu bearbeitende Oberfläche desselben keine starken Krümmungen quer zur Fräsrichtung aufweist und die Anstellung des Werkzeugs 11 bzw. Fräsers zum Werkstück 10 über die gesamte Fräsbearbeitung hinweg in etwa gleich sein kann.

Zur Definition der Führungskurve 12 für den Werkzeugvektor des Werkzeugs 11 wird wie in Fig. 1 dargestellt vorgegangen. Hierbei wird das Werkzeug 11 bzw. der Fräser entlang einer parallel zur Werkstückoberfläche verlaufenden Kurve bewegt, wobei das Werkzeug 11 mit der Werkzeugspitze auf dieser Kurve von einem Anfangspunkt 13 zu einem Endpunkt 14 verfahren wird. Der von der Werkzeugspitze beschriebene Weg zwischen dem Anfangspunkt 13 und dem Endpunkt 14 definiert die Führungskurve 12 für den Werkzeugvektor des Werkzeugs 11. Alle Bewegungen des Werkzeugs 11, die zwischen diesem Anfangspunkt 13 und dem Endpunkt 14 programmiert werden, werden als Führungskurve 12 interpretiert. Der Richtungssinn der Führungskurve 12 entspricht dem Richtungssinn der späteren Fräsbearbeitung des Werkstücks 10. In diesem Zusammenhang ist von Bedeutung, dass das Werkzeug 11 mit seiner Werkzeugspitze zur Definition der Führungskurve derart verfahren wird, dass eine Kollisionsfreiheit mit dem Werkstück 10 oder einem benachbarten Werkstück gewährleistet ist. Entlang der Führungskurve 12 kann demnach das Werkstück 10 kollisionsfrei bearbeitet werden.

Es liegt im Sinne der hier vorliegenden Erfindung, dass die eigentliche Fräsbearbeitung des Werkstücks einerseits unter Einbeziehung der Führungskurve als auch unter Nicht-Beachtung der Führungskurve durchgeführt werden kann. Bei aktivierter Führungskurve wird die Fräsbearbeitung des Werkstücks in Abhängigkeit von der Führungskurve durchgeführt. Bei deaktivierter Führungskurve hingegen bleibt dieselbe bei der Fräsbearbeitung des Werkstücks unberücksichtigt. Fig. 2 zeigt zur Veranschaulichung eine Fräsbearbeitung des Werkstücks 10 mit deaktivierter Führungskurve 12, wohingegen Fig. 3 eine Fräsbearbeitung des Werkstücks 10 mit aktivierter Führungskurve 12 zeigt.

Wie bereits erwähnt, zeigt Fig. 2 die Fräsbearbeitung des Werkstücks 10 bei deaktivierter Führungskurve 12. In diesem Fall werden der Verfahrweg des Werkzeugs 11 sowie die Ausrichtung des Werkzeugvektors des Werkzeugs 11 alleine aufgrund der definierten Werkzeugbahnen bzw. Fräsbahnen bestimmt, ohne die Führungskurve 12 zu berücksichtigen.

Bei aktivierter Führungskurve 12 hingegen wird im Sinne der Erfindung der Werkzeugvektor des Werkzeugs derart ausgerichtet, dass der Werkzeugvektor ausgehend von der Werkzeugspitze, die entlang der Werkzeugbahn bewegt wird, durch die Führungskurve 12 verläuft. Zu Beginn einer Werkzeugbahn 15 bzw. Fräsbahn verläuft bei aktivierter Führungskurve 12 der Werkzeugvektor durch den Anfangspunkt 13 und zu Ende der Werkzeugbahn 15 durch den Endpunkt 14 der Führungskurve 12. Zwischen dem Anfangspunkt 13 und dem Endpunkt 14 wird der Schnittpunkt des Werkzeugvektors mit der Führungskurve 12 in Abhängigkeit von einem Wegverhältnis interpoliert. Bei diesem Wegverhältnis handelt es sich um das Verhältnis zwischen dem von dem Werkzeug 11 auf seiner aktuellen Werkzeugbahn 15 zurückgelegten Weg bezogen auf den Gesamtweg entlang der aktuellen Werkzeugbahn.

Fig. 4 verdeutlicht ein Ausführungsbeispiel der hier vorliegenden Erfindung. Fig. 4 zeigt wiederum ein Werkstück 16, welches mithilfe eines Werkzeugs 17, nämlich eines Fräsers, bearbeitet werden soll. Fig. 4 zeigt das Werkzeug 17 wiederum in zwei unterschiedlichen Positionen relativ zum Werkstück 16.

Beim Ausführungsbeispiel der Fig. 4 werden zusätzlich zu der oder jeder Werkzeugbahn zwei Führungskurven für den Werkzeugvektor des Werkzeugs 17 definiert, nämlich eine erste, obere Führungskurve 18 und eine zweite, untere Führungskurve 19. Das erfindungsgemäße Verfahren eignet sich besonders dann, wenn die zu bearbeitende Oberfläche des zu bearbeitenden Werkstücks 16 eine stärkere Krümmung quer zur Fräsrichtung aufweist und sich die Ausrichtung des Werkzeugvektors von der ersten bis zur letzten Werkzeugbahn bzw. Fräserbahn stärker verändern muss.

Zur Definition der beiden Führungskurven 18, 19 wird in Analogie zur oben dargelegten Veranschaulichung der Fig. 1 bis 3 vorgegangen. Zur Definition der ersten Führungskurve 18 wird die Werkzeugspitze des Werkzeugs 17 von einem Anfangspunkt 20 zu einem Endpunkt 21 der ersten Führungskurve 18 bewegt. Analog wird zur Definition der zweiten Führungskurve 19 die Werkzeugspitze des Werkzeugs 11 von einem Anfangspunkt derselben zu einem Endpunkt derselben bewegt. Aufgrund der Darstellung in Fig. 4 sind sowohl der Anfangspunkt als auch der Endpunkt der zweiten Führungskurve 19 nicht dargestellt, weil dieselben von dem Werkzeug 17 jeweils verdeckt sind. Der Richtungssinn der beiden Führungskurven 18, 19 entspricht wiederum dem Richtungssinn der eigentlichen Fräsbearbeitung des Werkstücks 16.

In diesem Zusammenhang ist von Bedeutung, dass die erste, obere Führungskurve 18 so definiert wird, dass entlang der ersten Führungskurve 18 das Werkstück 16 im oberen Bereich kollisionsfrei bearbeitet werden kann. Die zweite, untere Führungskurve 19 wird so gewählt, dass das zu bearbeitende Werkstück 16 in einem unteren Bereich kollisionsfrei bearbeitet werden kann.

Wie Fig. 4 entnommen werden kann, spannen die erste, obere Führungskurve 18 sowie die zweite, untere Führungskurve 19 eine Führungsfläche 22 auf. Bei aktivierten Führungskurven 18, 19 wird der Werkzeugvektor des Werkzeugs 17 so ausgerichtet, dass abhängig von einem Verhältnis zwischen einer aktuellen Fräsbahn bzw. Werkzeugbahn 23 und der Gesamtzahl der Fräsbahnen bzw. Werkzeugbahnen eine Führungskurve 24 durch Interpolation ermittelt wird, wobei der Werkzeugvektor des Werkzeugs 17 durch diese interpolierte Führungskurve 24 gezwungen wird. Dies bedeutet, dass der Werkzeugvektor dann ausgehend von der Werkzeugspitze, die sich auf der aktuellen Fräsbahn bzw. Werkzeugbahn bewegt, durch die interpolierte Führungskurve 24 geführt wird.

Im Detail wird dabei so vorgegangen, dass die Werkzeugvektoren so ausgerichtet werden, dass sie die von den beiden Führungskurven 18, 19 aufgespannte Führungs fläche 22 wie folgt beschneiden. Quer zur Fräsrichtung schneidet der Werkzeugvektor des Werkzeugs 17 die Führungsfläche 22 bei der ersten Werkzeugbahn bzw. Fräsbahn in der ersten, oberen Führungskurve 18 und bei der letzten Fräsbahn bzw. Werkzeugbahn in der zweiten, unteren Führungskurve 19. Dazwischen wird die interpolierte Führungskurve 24 in Abhängigkeit vom Verhältnis der Anzahl der gesamten Werkzeugbahnen zu der aktuellen Werkzeugbahn 23 interpoliert.

In Richtung der Fräsbearbeitung wird der Schnittpunkt zwischen dem Werkzeugvektor und der ersten, zweiten oder interpolierten Führungskurve 18, 19 oder 24 in Analogie zum Ausführungsbeispiel der Fig. 1 bis 3 ermittelt. Das bedeutet, dass der Werkzeugvektor zu Beginn der aktuellen Werkzeugbahn 23 bzw. Fräserbahn durch einen Anfangspunkt und zu Ende derselben durch einen Endpunkt der jeweiligen Führungskurve 18, 19 bzw. 24 verläuft. Dazwischen wird der Schnittpunkt des Werkzeugvektors mit der jeweiligen Führungskurve 18, 19 bzw. 24 in Abhängigkeit eines Wegeverhältnisse interpoliert.

An dieser Stelle sei angemerkt, dass sowohl im Anschauungsbeispiel gemäß Fig. 1 bis 3 als auch im Ausführungsbeispiel gemäß Fig. 4 zur Definition der oder jeder Führungskurve das Werkzeug nicht wie oben beschrieben verfahren werden muss. Vielmehr kann die Definition der oder jeder Führungskurve auch durch direkte Programmierung einer Kurve in einem CAD/CAM-System erfolgen.

Nach einer vorteilhaften Weiterbildung des erfindungsgemäßen Verfahrens können zusätzlich zu der oder jeder Werkzeugbahn und zusätzlich zu jeder Führungskurve 18, 19 Synchronisationspunkte definiert werden. Mithilfe der Synchronisationspunkte wird die Ausrichtung des Werkzeugvektors zwischen der Werkzeugbahn und der Führungskurve synchronisiert. An jedem Synchronisationspunkt der Werkzeugbahn bzw. Fräsbahn wird dabei sichergestellt dass der Werkzeugvektor durch den entsprechenden Synchronisationspunkt der entsprechenden Führungskurve verläuft. Dies ist immer dann vorteilhaft, wenn die Werkzeugbahn eine abweichende Form bzw. abweichende Größenverhältnisse relativ zur Führungskurve besitzt.

Die Festlegung bzw. Definition der Synchronisationspunkte erfolgt bei der Definition der entsprechenden Führungskurve sowie der Definition der Werkzeugbahnen.

Damit sichergestellt ist, dass zu jedem Synchronisationspunkt der Werkzeugbahn ein korrespondierender Synchronisationspunkt der Führungskurve existiert, ist die Anzahl der Synchronisationspunkte der oder jeder Werkzeugbahn gleich der Anzahl der Synchronisationspunkte der oder jeder Führungskurve.

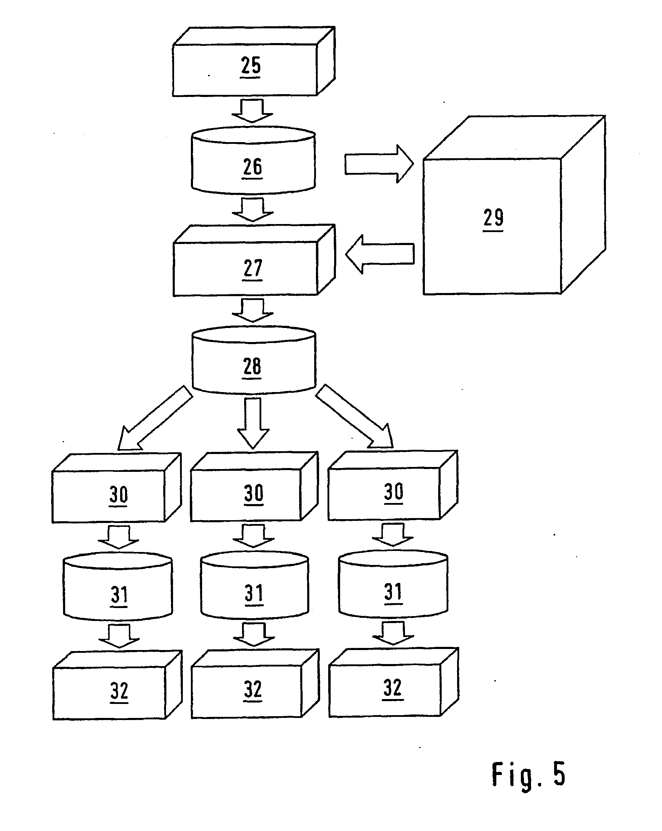

Fig. 5 zeigt ein stark schematisiertes Blockschaltbild einer Vorrichtung zum Fräsen von Freiformflächen gemäß des erfindungsgemäßen Verfahrens. Die Vorrichtung umfasst eine erste Programmiereinrichtung 25 zur Programmierung mindestens einer Werkzeugbahn bzw. Fräsbahn eines Fräswerkzeugs, Das Werkzeug bzw. der Fräser ist entlang dieser in der ersten Programmiereinrichtung 25 definierten Werkzeugbahnen relativ zum Werkstück bewegbar. Bei der ersten Programmiereinrichtung 25 handelt es sich um ein CAD/CAM-System. In diesem CAD/CAM-System sind die Werkzeugbahnen bzw. Fräsbahnen des Werkzeugs auf herkömmliche Art und Weise programmierbar. Das CAD/CAM-System erzeugt ein sogenanntes APT (Automatic Programming Tool)-File 26, wobei ein APT-Prozessor 27 aus dem APT-File 26 ein maschinenunabhängiges Steuerungsfile 28 für die Fräsbearbeitung des Werkstücks erzeugt.

Zusätzlich zu der ersten Programmiereinrichtung 25 umfasst die Vorrichtung Mittel zur Programmierung jeder Führungskurve für einen Werkzeugvektor des Werkzeugs, wobei diese Mittel im gezeigten Ausführungsbeispiel als eine zweite Programmiereinrichtung 29 ausgebildet sind. In der zweiten Programmiereinrichtung 29 werden zusätzliche Funktionen auf Basis der Programmiersprache APT zur Verfügung gestellt, die der Definierung der Führungskurven für einen Werkzeugvektor des Werkzeugs dienen, wobei beim Fräsen der Werkzeugvektor in Abhängigkeit von jeder Führungskurve beeinflussbar ist

Bei aktivierten Führungskurven werden die Führungskurven in den APT-Rechenlauf gemäß Fig. 5 derart eingebunden, dass vom CAD/CAM-System erzeugte Werkzeugvektoren durch von der zweiten Programmiereinrichtung 29 erzeugte Werkzeugvektoren ersetzt werden. Aus dem Steuerungsfile 28 werden mithilfe sogenannter Postprozessoren 30 sogenannten NC-Daten 31 erzeugt, die maschinenabhängig sind und der Steuerung der einzelnen Bewegungsachsen der NC-Maschine 32, also der Fräsmaschine, dienen.

An dieser Stelle sei darauf hingewiesen, dass die Mittel zur Programmierung jeder Führungskurve 18, 19 auch in die Programmiereinrichtung 25 zur Programmierung der oder jeder Werkzeugbahn bzw. Fräserbahn integriert sein können. In diesem Fall ist eine einzige Programmiereinrichtung vorhanden und die Werkzeugvektoren werden unmittelbar im CAD/CAM-System beeinflusst.

Mithilfe des erfindungsgemäßen Verfahrens lässt sich das Fräsen von Freiformflächen erheblich verbessern. Mithilfe der Erfindung können auch bei Unstetigkeiten im CAD-Modell noch gute Fräsergebnisse erzielt werden. Da für die Fräsbearbeitung keine Stützvektoren mehr konstruiert werden müssen, reduziert sich nochmals die Bearbeitungszeit. Eine Bereinigung der CAD-Modelle in Bezug auf Unstetigkeiten ist nicht mehr erforderlich. Die Anzahl der Iterationsschritte bei der Programmierung und Erprobung der Fräsbearbeitung kann reduziert werden, da durch jede Führungskurve eine Kollision mit dem zu bearbeitenden Werkstück bzw. einem Nachbarwerkstück sicher vermieden werden kann. Weiterhin verbessert sich das Ergebnis der gefrästen Oberfläche. Nachfolgende Bearbeitungsschritte zur Oberflächenverbesserung können vermieden werden. Da Schwingungen der Fräsmaschine mithilfe der Erfindung vermieden werden können, reduziert sich einerseits der Verschleiß an der Fräsmaschine und andererseits wird die Produktion von Ausschuss deutlich reduziert.

Die Vorrichtung eignet sich besonders für die Fräsbearbeitung von Verdichter- oder Turbinenschaufeln an sogenannten Blisks. Mithilfe der Erfindung ist es erstmals möglich, eine Serienfertigung von Blisks auf Fräsmaschinen wirtschaftlich durchzuführen.

## Patentansprüche

1. Verfahren zum Fräsen von Freiformflächen an Werkstücken, insbesondere zum 5-Achsfräsen, wobei ein Werkstück (16) von einem Werkzeug (17) bzw. einem Fräser derart gefräst wird, dass sich eine gewünschte Freiformfläche ergibt, wobei das Werkzeug (17) zum Fräsen entlang mindestens einer definierten Werkzeugbahn bzw. Fräsbahn relativ zum Werkstück bewegt wird und zusätzlich zu der oder jeder Werkzeugbahn eine erste Führungskurve (18, 19) für einen Werkzeugvektor des Werkzeugs definiert wird, wobei beim Fräsen der Werkzeugvektor in Abhängigkeit von der oder jeder Führungskurve (18, 19) zur Vermeidung von Kollisionen ausgerichtet wird, **dadurch gekennzeichnet, dass** eine zweite Führungskurve (18, 19) für den Werkzeugvektor des Werkzeugs (17) definiert wird, wobei die Führungskurven (18, 19) derart definiert werden, dass das Werkstück kollisionsfrei bearbeitet werden kann und wobei durch die erste und zweite Führungskurve (18, 19) eine Führungsfläche (22) bestimmt wird, und dass abhängig von einem Verhältnis zwischen einer aktuellen Fräsbahn und der Gesamtanzahl der Fräsbahnen eine in der Führungsfläche (22) liegende Führungskurve (24) ermittelt wird, durch die der Werkzeugvektor des Werkzeugs (17) geführt wird.

2. Verfahren nach Anspruch 1, **dadurch gekennzeichnet, dass** jede Führungskurve (18, 19) aktivierbar und deaktivierbar ist, derart, dass ausschließlich bei aktivierten Führungskurven (18, 19) der Werkzeugvektor in Abhängigkeit von jeder Führungskurve (18, 19) ausgerichtet wird.

3. Verfahren nach Anspruch 1 oder 2, **dadurch gekennzeichnet, dass** zusätzlich zu jeder Führungskurve (18, 19) und der oder jeder Werkzeugbahn Synchronisationspunkte definiert werden, wobei mit Hilfe der Synchronisationspunkte die Ausrichtung des Werkzeugsvektors zwischen der oder jeden Werkzeugbahn und jeder Führungskurve (18, 19) synchronisiert wird.

4. Verfahren nach einem oder mehreren der Ansprüche 1 bis 3, **dadurch gekennzeichnet, dass** ein Richtungssinn jeder Führungskurve (18, 19) einem Richtungssinn der Fräsbearbeitung des Werkstücks (16) entspricht.

5. Verfahren nach einem oder mehreren der Ansprüche 1 bis 4, **dadurch gekennzeichnet, dass**
a) quer zur Fräsrichtung der Werkzeugvektor die Führungsfläche (22) bei einer ersten Fräsbahn in der ersten Führungskurve (18) schneidet, dass bei einer letzten Fräsbahn der Werkzeugvektor die Führungsfläche (22) in der zweiten Führungskurve (19) schneidet, und dass dazwischen abhängig von dem Verhältnis zwischen der aktuellen Fräsbahn und der Gesamtanzahl der Fräsbahnen die in der Führungsfläche liegende, interpolierte Führungskurve (14) durch Interpolation ermittelt,
b) in Fräsrichtung ein Schnittpunkt zwischen dem Werkzeugvektor und der ersten, zweiten oder interpolierten Führungskurve (18, 19, 24) **dadurch** ermittelt wird, dass der Werkzeugvektor zu Beginn der Fräsbahn durch einen Anfangspunkt und zu Ende der Fräsbahn durch einen Endpunkt der jeweiligen Führungskurve (18, 19, 24) verläuft, und dass dazwischen der Schnittpunkt des Werkzeugvektors mit der jeweiligen Führungskurve in Abhängigkeit eines Wegverhältnisses interpoliert wird.

## Claims

1. Method for milling freeform surfaces on workpieces, especially for 5-axis milling, wherein a workpiece (6) is milled by a tool (17) or a milling cutter such that a desired freeform surface is produced, wherein the tool (17) for milling is moved relative to the workpiece along at least one defined tool path or milling path and in addition to the or each tool path a first guide curve (18, 19) for a tool vector of the tool is defined, wherein during milling the tool vector is oriented in dependence on the or each guide curve (18, 19) to avoid collisions, **characterised in that** a second guide curve (18, 19) for the tool vector of the tool (17) is defined, wherein the guide curves (18, 19) are defined so that the workpiece can be machined free from collisions and wherein the first and the second guide curve (18, 19) define a guide surface (22), and **in that** depending on a relationship between an actual milling path and the total number of milling paths a guide curve (24) lying in the guide surface (22) is determined, which guide curve guides the tool vector of the tool (17).

2. Method according to claim 1, **characterised in that** each guide curve (18, 19) is activatable and deactivatable, such that the tool vector is oriented in dependence on each guide curve (18, 19) exclusively in the case of activated guide curves (18, 19).

3. Method according to claim 1 or 2, **characterised in that** in addition to each guide curve (18, 19) and the or each tool path, synchronisation points are defined, wherein the orientation of the tool vector between the or each tool path and each guide curve (18, 19) is synchronised by means of the synchronisation points.

4. Method according to one or more of claims 1 to 3, **characterised in that** a direction of each guide curve (18, 19) corresponds to a direction of milling of the workpiece (16).

5. Method according to one of more of claims 1 to 4, **characterised in that**
a) transversely to the milling direction the tool vector intersects the guide surface (22) in the case of a first milling path in the first guide curve (18), **in that** in the case of a last milling path the tool vector intersects the guide surface (22) in the second guide curve (19) and **in that** in between, depending on the relationship between the current milling path and the total number of milling paths, determines by interpolation the interpolated guide curve (14) lying in the guide surface,
b) in the milling direction an intersection point between the tool vector and the first, second or interpolated guide curve (18, 19, 24) is determined **in that** the tool vector at the beginning of the milling path runs through a starting point and at the end of the milling path runs through an end point of the respective guide curve (18, 19, 24), and **in that** in between the intersection point of the tool vector with the respective guide curve is interpolated in dependence on a path relationship.

## Revendications

1. Procédé de fraisage de surfaces à forme libre sur des pièces, en particulier pour le fraisage selon 5 axes, d'une pièce (16) fraisée par un outil (17) ou une fraiseuse pour obtenir une surface à forme libre souhaitée, l'outil (17) de fraisage étant déplacé le long d'au moins une trajectoire d'outil ou trajectoire de fraisage par rapport à la pièce, en définissant en plus de la trajectoire d'outil ou de chaque trajectoire d'outil, une première courbe de guidage (18, 19) pour un vecteur d'outil de l'outil et, lors du fraisage, en dirigeant le vecteur d'outil orienté en fonction de la courbe de guidage (18, 19) ou de chaque courbe de guidage afin d'éviter les collisions,
**caractérisé en ce qu'**
on définit une deuxième courbe de guidage (18, 19) pour le vecteur d'outil de l'outil (17), les courbes de guidage (18, 19) étant définies pour que la pièce soit usinée sans collision et que la première et la deuxième courbe de guidage (18, 19) définissent une surface de guidage (22), et
en fonction d'un rapport entre une trajectoire de fraisage effective et le nombre total de trajectoires de fraisage, on détermine une courbe de guidage (24) située dans la surface de guidage (22), permettant de guider le vecteur d'outil de l'outil (17).

2. Procédé selon la revendication 1,
**caractérisé en ce que**
chaque courbe de guidage (18, 19) peut être activée et désactivée, pour orienter le vecteur d'outil en fonction de chaque courbe de guidage (18, 19) exclusivement lorsque les courbes de guidage (18, 19) sont activées.

3. Procédé selon la revendication 1 ou 2,
**caractérisé en ce qu'**
en plus de chaque courbe de guidage (18, 19) et de la trajectoire d'outil ou de chaque trajectoire d'outil, on définit des points de synchronisation permettant de synchroniser l'orientation du vecteur d'outil entre la trajectoire d'outil ou chaque trajectoire d'outil et chaque courbe de guidage (18, 19).

4. Procédé selon l'une ou plusieurs des revendications 1 à 3,
**caractérisé en ce qu'**
un sens directionnel de chaque courbe de guidage (18, 19) correspond à un sens directionnel de l'usinage par fraisage de la pièce (16).

5. Procédé selon l'une ou plusieurs des revendications 1 à 4,
**caractérisé en ce que**
a) perpendiculairement à la direction de fraisage, le vecteur d'outil coupe la surface de guidage (22), pour une première trajectoire de fraisage dans la première courbe de guidage (18), le vecteur d'outil coupe la surface de guidage (22) dans la deuxième courbe de guidage (19) pour une dernière trajectoire de fraisage et, entre ces points, en fonction du rapport entre la trajectoire de fraisage effective et le nombre total de trajectoires de fraisage, on détermine par interpolation la courbe de guidage (14) interpolée située dans la surface de guidage, et
b) dans la direction de fraisage, on détermine un point d'intersection entre le vecteur d'outil et la première courbe de guidage (18), la deuxième courbe de guidage (19) ou la courbe de guidage interpolée (24), de telle sorte que le vecteur d'outil, au début de la trajectoire de fraisage, passe par un point de départ et, à la fin de la trajectoire de fraisage, passe par un point d'arrivée de la courbe de guidage respective (18, 19, 24) et, entre ces points, on interpole le point d'intersection du vecteur d'outil avec la courbe de guidage respective en fonction d'un rapport de trajectoire.
